# EUROPEAN PATENT APPLICATION

(11) **EP 4 722 025 A1**
(43) Date of publication of application: **08.04.2026**
(21) Application number: 25196919.2
(22) Date of filing: 20.08.2025
(51) Int. Cl.: B60L 53/14, B60L 53/16, B60L 53/66, B60L 55/00, H02J 3/32, B60L 1/00, B60L 50/10

(54) **POWER SUPPLY SYSTEM**

(30) Priority: 03.10.2024 JP 2024174261
(71) Applicant: TOYOTA JIDOSHA KABUSHIKI KAISHA, Toyota-shi, Aichi-ken 471-8571 (JP)
(72) Inventor: ANDO, Toru, Toyota-shi, Aichi-ken, 471-8571 (JP)
(74) Representative: TBK

(57) **Abstract**

An inlet (210) has a PISW to receive a reference voltage from a vehicle. When a discharging connector (100) is connected to the inlet (210), a PP terminal (PISW) receives the reference voltage. A detection circuit (540A) and a detection circuit (540B) selectively form a PISW circuit (a closed circuit) by a switch (S3B). Before the discharging connector (100) is connected to the inlet (210), the switch (S3B) is in a position to form the PISW circuit by the detection circuit (540A). When the discharging connector (100) is connected to the inlet (210), a power supply (or discharging) current is set based on a PISW potential and the vehicle starts discharging power. When the vehicle starts discharging power, a PWM signal generator (510) operates using power on a voltage line (L11, L12) as a power source, and a PWM signal is transmitted to the vehicle via a CP terminal (CPLT). The vehicle continues to discharge power by a power supply current based on the PWM signal.

## Description

### CROSS REFERENCE TO RELATED APPLICATIONS

This nonprovisional application is based on Japanese Patent Application No. 2024-174261 filed on October 3, 2024 with the Japan Patent Office, the entire contents of which are hereby incorporated by reference.

### BACKGROUND

### Field

The present disclosure relates to a power supply system.

### Description of the Background Art

Japanese Patent Laying-Open No. 2013-038996 discloses that a CPLT (control pilot) signal is used to transmit and receive a connected state of a charging cable, whether a vehicle can be powered from an external power source, a rated current and other similar information between the vehicle and charging equipment. The CPLT signal is a pulse width modulation (PWM) signal used in communications between the vehicle and the charging equipment.

Japanese Patent Laying-Open No. 2015-122892 describes that when an external load is supplied with power (or powered) from a power storage device mounted on a vehicle, a power supply mode is set using a potential signal (also referred to as a "proximity signal" or a "PISW signal") of a terminal for detecting a state of a discharging connector (i.e., proximity detection).

When an external load is powered from a vehicle, the CPLT signal or the PISW signal is used to communicate a connected state of a discharging connector, a power supply voltage, a power supply current, and other information between the vehicle and power supply equipment. For example, "SAE 2847/5", a standard of the Society of Automotive Engineers, defines a power supply system using the PISW signal and the CPLT signal.

In the PISW signal, a power supply voltage and a power supply current (a maximum current) are set according to the potential of the PISW signal. Using the potential of the PISW signal limits a voltage/current pattern that can be set, and, for example, three patterns are set.

In the CPLT signal, a power supply voltage and a power supply current are set using PWM's duty ratio and frequency. Using the duty ratio allows a degree of freedom for a settable voltage/current pattern. The CPLT signal is generated by a PWM signal generator (a PWM signal generation circuit) provided in power supply equipment. Setting a power supply voltage and a power supply current using the CPLT signal requires that the power supply equipment have a power source (a battery) for operating the PWM signal generator. When the power supply equipment does not comprise a power source (a battery), the CPLT signal cannot be used to set a power supply voltage or a power supply current when a discharging connector is connected. The power supply equipment that does not comprise a power source (a battery) thus has a limited degree of freedom in setting the power supply voltage and the power supply current.

### SUMMARY

An object of the present disclosure is to increase a degree of freedom in setting a power supply current in power supply equipment which does not comprise a power source.

The presently disclosed power supply system comprises: a vehicle having mounted thereon at least one of a power storage device and a power generation device and including a discharging port; a discharging assembly including a discharging connector connectable to the discharging port; and a controller. The discharging assembly includes a power line to receive power supplied from at least one of the power storage device and the power generation device and transmit the received power to a load, and a PWM signal generator configured to generate a PWM signal using the power supplied on the power line as a power source. The controller is configured to control the PWM signal generator to generate the PWM signal when supplying the power on the power line is started.

According to this configuration, a discharging assembly supplies a load with power supplied from at least one of a power storage device and a power generation device mounted on a vehicle. The discharging assembly includes a power line to transmit power to the load. The discharging assembly includes a discharging connector, which is connected to a discharging port of the vehicle. The discharging assembly includes a PWM signal generator configured to generate a PWM signal. The PWM signal generator generates the PWM signal using power supplied on the power line as a power source. When supplying the power on the power line is started, the controller uses the power as a power source to generate the PWM signal by the PWM signal generator.

The PWM signal generator generates the PWM signal (corresponding to a CPLT signal) using power supplied from at least one of the power storage device and the power generation device as a power source. This allows the discharging assembly (or power supply equipment) that does not comprise a power source to generate the PWM signal (or CPLT signal) and hence increase a degree of freedom in setting a power supply current.

The controller may be provided in the vehicle or may be provided in the discharging assembly. The controller may be provided in both the vehicle and the discharging assembly and functionally divided and shared thereby. The controller provided in the discharging assembly may operate using the power supplied from at least one of the power storage device and the power generation device as a power source, and may be activated when it receives power.

The discharging assembly may further include a first terminal to receive a reference voltage supplied from the vehicle, and a first resistance circuit configured to form a closed circuit including the first terminal when the discharging connector is connected to the discharging port. The controller may be configured to control the vehicle to start supplying the power on the power line based on a potential of the closed circuit formed by the first resistance circuit.

According to this configuration, the discharging connector includes a first terminal. When the discharging connector is connected to the discharging port, the first terminal receives a reference voltage supplied from the vehicle. The discharging assembly includes a first resistance circuit, which forms a closed circuit including the first terminal. Supplying the power on the power line is started based on a potential of the closed circuit formed by the first resistance circuit.

When the discharging connector is connected to the discharging port, supplying power is started based on the potential of the closed circuit formed by the first resistance circuit. The PWM signal generator generates the PWM signal (corresponding to the CPLT signal) using the supplied power as a power source. This allows the discharging assembly (or power supply equipment) that does not comprise a power source to start supplying power, and also generate the PWM signal (the CPLT signal) and hence increase a degree of freedom in setting a power supply current.

The discharging assembly may further include a second terminal connected to the PWM signal generator, a second resistance circuit configured to form the closed circuit including the first terminal when the discharging connector is connected to the discharging port, and a first switching mechanism configured to switch the first and second resistance circuits so that one of the first and second resistance circuits forms the closed circuit including the first terminal. After supplying the power on the power line is started, the controller may be configured to control the first switching mechanism so that the second resistance circuit forms the closed circuit including the first terminal, and the PWM signal may be transmitted to the vehicle via the second terminal.

According to this configuration, after supplying the power on the power line is started, the first switching mechanism can switch the second resistance circuit to form the closed circuit including the first terminal, and the potential of the closed circuit including the second resistance circuit can be used to sense connection between the discharging port and the discharging connector. The PWM signal (or CPLT signal) can be transmitted to the vehicle via the second terminal and used to set a power supply current supplied from the vehicle.

The discharging assembly may further include a second switching mechanism configured to switch connection and disconnection between the PWM signal generator and the second terminal. Before the discharging connector is connected to the discharging port, the controller may be configured to control the first switching mechanism so that the first resistance circuit forms the closed circuit including the first terminal, and control the second switching mechanism to interrupt connection between the PWM signal generator and the second terminal. Furthermore, when supplying the power on the power line is started, the controller may be configured to control the first switching mechanism so that the second resistance circuit forms the closed circuit including the first terminal and control the second switching mechanism to connect the PWM signal generator to the second terminal.

According to this configuration, the closed circuit including the first terminal is formed by the first resistance circuit before the discharging connector is connected to the discharging port. When the discharging connector is connected to the discharging port, supplying power is started based on the potential of the closed circuit formed by the first resistance circuit. When supplying the power on the power line is started, the first and second switching mechanisms operate so that the second resistance circuit forms the closed circuit including the first terminal and the PWM signal generator is connected to the second terminal. Thus, after supplying the power on the power line is started, the PWM signal (or CPLT signal) can be used to supply (or discharge) power.

The first and second switching mechanisms may operate using the power supplied on the power line. When no power is supplied, the first switching mechanism may connect the first resistance circuit to the first terminal so that the first resistance circuit forms the closed circuit including the first terminal, and the second switching mechanism may interrupt connection between the PWM signal generator and the second terminal.

According to this configuration, even the discharging assembly that does not comprise a power source can form the closed circuit including the first terminal by the first resistance circuit and interrupt connection between the PWM signal generator and the second terminal before the discharging connector is connected to the discharging port. And after the power line receives power, the power can be used to turn the first switching mechanism so that the second resistance circuit forms the closed circuit including the first terminal and turn the second switching mechanism to connect the PWM signal generator to the second terminal.

These and other objects, features, aspects and advantages of the present disclosure will become apparent from the following detailed description taken in conjunction with the accompanying drawings.

### BRIEF DESCRIPTION OF THE DRAWINGS

Fig. 1 generally, schematically shows a configuration of a power supply system according to an embodiment.
Fig. 2 shows a configuration around a charging/discharging device.
Fig. 3 shows an external appearance of a discharging connector.
Fig. 4 shows a schematic circuit configuration of the discharging connector and an inlet.
Fig. 5 is timing plots representing a sequence of starting and stopping discharging power by the discharging connector.
Fig. 6 is a flowchart of a process performed by an ECU to start discharging power.
Fig. 7 is a schematic diagram of a circuit configuration of a discharging connector and an inlet according to a modification.
Fig. 8 shows a modification of a discharging assembly (a discharging connector).

### DESCRIPTION OF THE PREFERRED EMBODIMENTS

Hereinafter, embodiments of the present disclosure will be described in detail with reference to the drawings. In the figures, identical or equivalent components are identically denoted and will not be described repeatedly. Hereinafter, an electronic control unit will be referred to as an "ECU". Furthermore, an alternating current may be referred to as "AC", and a direct current may be referred to as "DC".

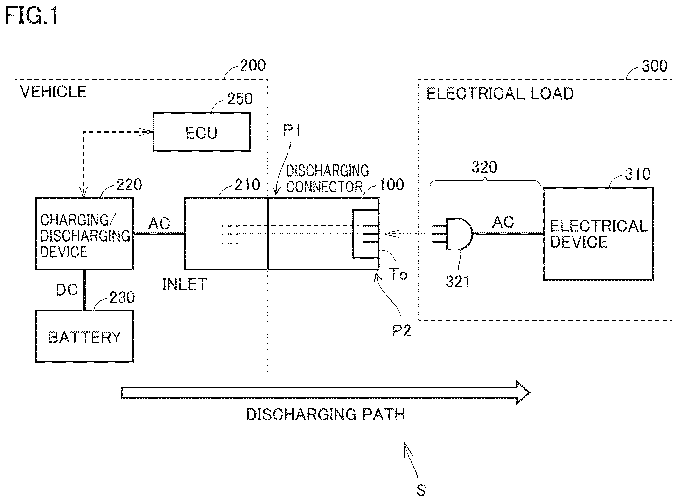

Fig. 1 generally, schematically shows a configuration of a power supply system according to an embodiment. The power supply system according to the present embodiment is applied to V2L (Vehicle to Load) allowing a vehicle to directly power an electrical device. V2L employs a power converter mounted for a vehicle (e.g., an in-vehicle inverter) to power an electrical device. The in-vehicle inverter is a device that converts DC power of a driving in-vehicle battery to AC power and supplies the AC power to the electrical device.

Referring to Fig. 1, a power supply system S includes a discharging connector 100 and a vehicle 200 and is configured to receive power from vehicle 200 and supply the received power to an electrical load (or an external load) 300 through discharging connector 100. In the present embodiment, discharging connector 100 includes a first end P1 and a second end P2 and functions as a discharging assembly. The discharging assembly is power supply equipment that receives power from vehicle 200 and supplies the received power to electrical load 300. Vehicle 200 may be any vehicle having a discharging function, and while a BEV (battery electric vehicle) comprising no engine (internal combustion engine) is adopted as vehicle 200 in the present embodiment, the vehicle may be a PHEV (plug-in hybrid electric vehicle) comprising an engine.

Electrical load 300 comprises an electrical device 310 (a device body) and a power cord 320 connected to electrical device 310. Electrical device 310 is driven when it receives prescribed AC power supplied through power cord 320. Discharging connector 100 includes a socket To to which a plug 321 of power cord 320 is connectable.

Vehicle 200 comprises an inlet 210 (a vehicular inlet), a charging/discharging device 220, a battery 230, and an ECU 250. Inlet 210 and battery 230 correspond to an example of a "discharging port" and a "power storage device", respectively, according to the present disclosure. Inlet 210 corresponds to a portion of power supply system S which is fixed in vehicle 200. Battery 230 for example includes a secondary battery. The secondary battery may be a lithium ion battery or a nickel metal hydride battery. Battery 230 may be an electric double layer capacitor. Vehicle 200 is configured to be capable of travelling using power stored in battery 230. Vehicle 200 comprises an electric motor that receives power supplied from battery 230, and the vehicle travels by driving force generated by the electric motor.

Charging/discharging device 220 is configured to electrically charge battery 230. Charging/discharging device 220 is configured to receive AC power supplied from outside the vehicle to inlet 210, convert the received AC power to DC power (or perform AC/DC conversion), and output the DC power to battery 230. Charging/discharging device 220 is also configured to discharge power of battery 230 to outside the vehicle. In the present disclosure, discharging power of battery 230 outside the vehicle is also referred to as "supplying power". Charging/discharging device 220 is configured to receive DC power supplied from battery 230, convert the received DC power to AC power (or perform DC/AC conversion), and output the AC power to inlet 210.

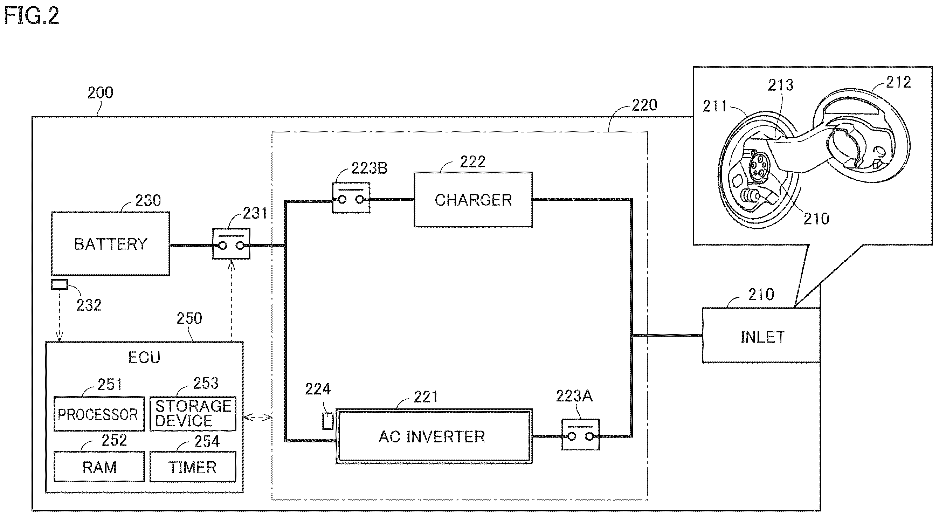

Fig. 2 is a diagram for illustrating a configuration around charging/discharging device 220. An SMR (system main relay) 231 is provided between charging/discharging device 220 and battery 230. SMR 231 is configured to switch connection/disconnection of an electrical path interconnecting charging/discharging device 220 and battery 230. When inlet 210 and battery 230 communicate power therebetween, ECU 250 closes (or connects) SMR 231. Battery 230 is provided with a BMS (a battery management system) 232. BMS 232 includes a variety of types of sensors to detect a state of battery 230, and outputs a detection result to ECU 250. ECU 250 can obtain the state of battery 230 (e.g., temperature, current, voltage, state of charge (SOC), etc. thereof) based on the output of BMS 232.

Inlet 210 is disposed in an opening 211 provided in the vehicular body. A lid 212 is attached to the vehicular body via a hinge 213. Inlet 210 is used with lid 212 opened. When lid 212 is closed, lid 212 covers opening 211 (including inlet 210) and thus prohibits use of inlet 210. Inlet 210 of the present embodiment is an AC inlet. When battery 230 is charged using inlet 210, AC power is input to inlet 210 from outside the vehicle.

ECU 250 is configured to control charging/discharging device 220. ECU 250 may be a computer. ECU 250 includes a processor 251, a random access memory (RAM) 252, a storage device 253, and a timer 254. ECU 250 corresponds to an example of a "controller" according to the present disclosure. In ECU 250, processor 251 executes a program stored in storage device 253, and thereby vehicle 200 is controlled in a variety of manners. ECU 250 may include any number of processors, and each predetermined control may be applied through a processor prepared therefor.

Charging/discharging device 220 includes an AC inverter 221 and a charger 222 located between inlet 210 and battery 230 and connected in parallel. A discharging relay 223A is provided between AC inverter 221 and inlet 210. Discharging relay 223A is configured to switch connection/disconnection of a discharging path from AC inverter 221 to inlet 210. AC inverter 221 may include a plurality of inverters and an isolation circuit (an isolation transformer), for example, and receives DC power input from battery 230, converts the received DC power to AC power of a predetermined frequency, and outputs the AC power toward inlet 210. AC inverter 221 corresponds to an example of a "discharging device" of the present disclosure.

AC inverter 221 is provided with a monitoring unit 224. Monitoring unit 224 includes a variety of types of sensors to detect a state of AC inverter 221 (e.g., voltage, current, and temperature thereof), and outputs a detection result to ECU 250. ECU 250 controls AC inverter 221 based on the output of monitoring unit 224. This adjusts power output from AC inverter 221 to inlet 210 (or power supplied). ECU 250 may be configured to monitor a current of AC inverter 221 and limit the current for an inverter with a current likely to exceed a predetermined allowable value for the current.

ECU 250 can disconnect AC inverter 221 from inlet 210 by interrupting discharging relay 223A. Discharging relay 223A interrupted prohibits discharging power from AC inverter 221 to inlet 210.

Charger 222 receives AC power input from inlet 210, converts the received AC power to DC power, and outputs the DC power to battery 230. A charging relay 223B is provided between charger 222 and battery 230 (on a side closer to charger 222 than SMR 231 is). Charging relay 223B is configured to switch connection/disconnection of a charging path from charger 222 to battery 230. Charging relay 223B interrupted prohibits supplying power from inlet 210 to battery 230 via charger 222.

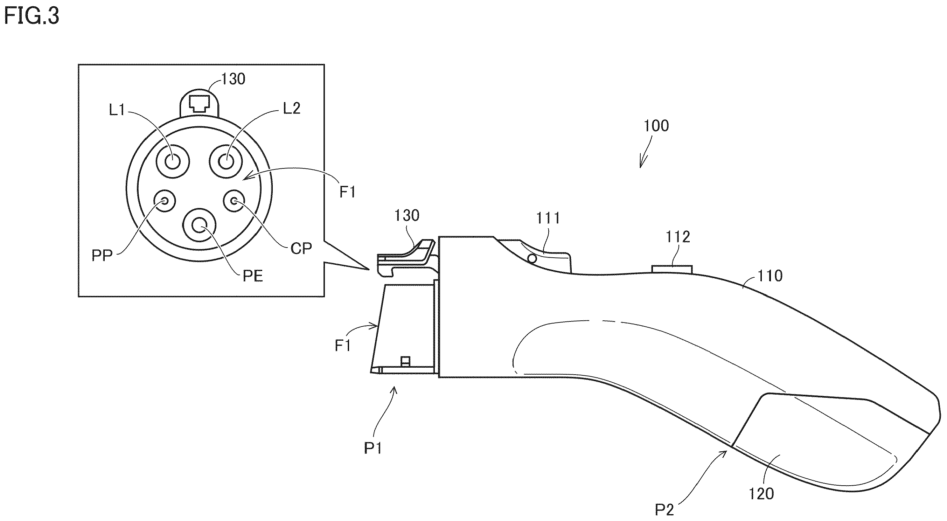

Fig. 3 is an external appearance of discharging connector 100. Discharging connector 100 has a first end P1 and a second end P2. First and second ends P1 and P2 are located at opposite ends of a main body 110 of discharging connector 100. First end P1 is configured to be connectable to inlet 210 of vehicle 200. Second end P2 includes socket To (see Fig. 1) to which plug 321 (see Fig. 1) of power cord 320 is connectable. Second end P2 of discharging connector 100 includes a cover 120 attached to be openable and closable. When cover 120 is opened, socket To provided at second end P2 is exposed, and plug 321 can be connected to the socket.

First end P1 of discharging connector 100 has an end surface F1 with a connector terminal. End surface F1 of first end P1 of discharging connector 100 is a surface (a connection surface) connected to inlet 210 of vehicle 200 (see Fig. 2). The connector terminal provided in end surface F1 includes an L1 terminal, an L2 terminal, a PE terminal, a PP terminal, and a CP terminal.

The L1 and L2 terminals correspond to two terminals to receive AC power from vehicle 200. Terminal L1 is a hot-side terminal, and terminal L2 is a cold-side terminal. Hereinafter, the L1 terminal will also be referred to as "AC1", and the L2 terminal will also be referred to as "AC2". The PE terminal corresponds to a ground terminal (hereinafter also referred to as "GND"). The PP terminal is a terminal (hereinafter also referred to as "PISW") for detecting a state of discharging connector 100 and inlet 210 (that is, connected state/fitted state/unfitted state) (i.e., proximity detection). Hereinafter, a state of discharging connector 100 and inlet 210 will also be referred to as a "connector state". The PP terminal outputs a potential signal (a PISW signal) indicating a connector state toward vehicle 200. Note that a potential of the PISW signal may be referred to as a "PISW potential". The CP terminal corresponds to a terminal for a CPLT signal (hereinafter also referred to as "CPLT") defined in the standard "IEC/TS 62763:2013", for example. The CPLT signal is a PWM signal used in communications between vehicle 200 and discharging connector 100. The PP terminal corresponds to an example of a "first terminal" of the present disclosure, and the CP terminal corresponds to an example of a "second terminal" of the present disclosure.

Inlet 210 (Fig. 1) has terminals corresponding to the terminals of discharging connector 100 (L1, L2, PE, PP, CP). Hereinafter, in order to clarify the correspondence between the terminals on both sides, the terminals of inlet 210 corresponding to the L1, L2, PE, PP and CP terminals of discharging connector 100 will also be referred to as AC1, AC2, GND, PISW, and CPLT, respectively. When discharging connector 100 and inlet 210 are fitted together, the AC1, AC2, GND, PISW, and CPLT provided at first end P1 of discharging connector 100 come into contact with the AC1, AC2, GND, PISW, and CPLT, respectively, of inlet 210. Inlet 210 has the PISW configured to output to ECU 250 (Fig. 2) a potential signal (a PISW potential) indicating information of the discharging assembly (the discharging connector) connected to inlet 210. The information of the discharging assembly includes a value of voltage that the discharging assembly requires, an upper limit current (a maximum current), and a type of a socket that the discharging assembly includes. Thus, ECU 250 is configured to obtain the value of voltage that the discharging assembly connected to inlet 210 requires and the like, and the type of the socket that the discharging assembly connected to inlet 210 includes. Discharging connector 100 may have a terminal and a structure to fit to inlet 210 in conformity with Type 1 defined in the standard "SAEJ1772/IEC62196-2", for example.

Discharging connector 100 further includes an unlatch button 111, a start discharge switch 112, and a latch 130.

Unlatch button 111 has a function of unlatching discharging connector 100 from inlet 210 and a function of causing vehicle 200 (for example, ECU 250) to sense a connector state (i.e., connected state/fitted state/unfitted state). Latch 130 is configured to engage with inlet 210 to secure (or latch) discharging connector 100 to inlet 210. For example, discharging connector 100 is latched when latch 130 has a tip thereof hooked to a recess formed in inlet 210. Latch 130 gangs with unlatch button 111. When the user presses unlatch button 111, the latch is disengaged.

When the user inserts discharging connector 100 into inlet 210 without pressing unlatch button 111 and fits discharging connector 100 to inlet 210, discharging connector 100 and inlet 210 are secured by latch 130 while they are electrically connected together. This connector state is a "connected state". In the connected state, discharging connector 100 is inserted into inlet 210, they have their terminals all electrically connected, and discharging connector 100 is latched. When the user presses unlatch button 111 in the connected state, latch 130 no longer secures the discharging connector to the inlet. This connector state is a "fitted state". In the fitted state, discharging connector 100 is inserted into inlet 210, they have their terminals all electrically connected, and discharging connector 100 is unlatched. When the user pulls out discharging connector 100 from inlet 210 in the fitted state, the connector state becomes an "unfitted state". The unfitted state is a state which is neither the connected state nor the fitted state. When the connector state is the connected state or the fitted state, ECU 250 prohibits vehicle 200 from travelling.

Start discharge switch 112 has a function of causing vehicle 200 (for example, ECU 250) to sense that discharging power starts by changing the PISW signal (or the PISW potential). The PISW signal will more specifically be described hereinafter.

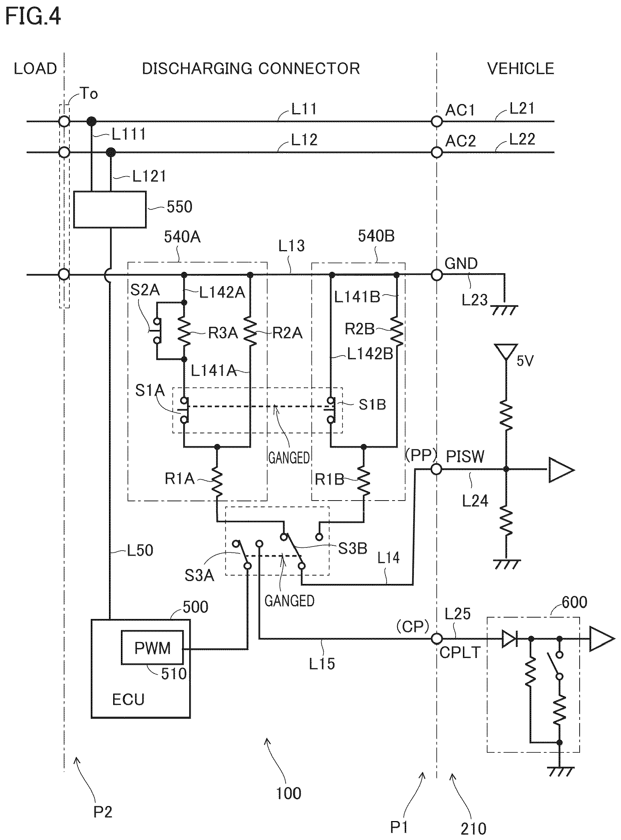

Fig. 4 is a schematic diagram of a circuit configuration of discharging connector 100 and inlet 210. Discharging connector 100 has a voltage line L11, a voltage line L12, and a neutral line L13 connected to first end P1's AC1, AC2, and GND, respectively. Voltage lines L11 and L12 correspond to an example of a "power line" of the present disclosure. Vehicle 200 has a voltage line L21, a voltage line L22, and a neutral line L23 connected to inlet 210's AC1, AC2, and GND, respectively. Voltage lines L21 and L22 transmit an AC current for example of a single phase of 120 V output from AC inverter 221. Voltage line L21, voltage line L22, and neutral line L23 may be used to output AC power of 240 V of a single-phase three-wire system output from AC inverter 221.

Discharging connector 100 is provided with an ECU 500, which includes a PWM signal generator 510. ECU 500 and PWM signal generator 510 are operated by power supplied from an AC/DC converter 550. AC/DC converter 550 is connected to voltage lines L11 and L12 via power supply lines L111 and L121. AC power is supplied from vehicle 200 (battery 230) to power supply lines L111 and L121, received and converted by AC/DC converter 550 to DC power, and thus supplied to ECU 500 and PWM signal generator 510 via a power supply line L50. This activates ECU 500, and PWM signal generator 510 is operable. ECU 500 may be similar in configuration to ECU 250. ECU 500 corresponds to an example of the "controller" of the present disclosure.

In vehicle 200, a reference voltage is provided between the vehicular body (or the ground) and a signal line L24, and signal line L24 is connected to the PISW. The PISW signal (or PISW potential) is input to ECU 250 via signal line L24. When discharging connector 100 (first end P1) and inlet 210 are electrically connected together, the PP terminal of discharging connector 100 receives the reference voltage supplied from vehicle 200, and a closed circuit (hereinafter also referred to as a "PISW circuit") is formed so that the PISW and the GND are connected via a circuit (a detection circuit 540A or a detection circuit 540B described hereinafter) of discharging connector 100. The PISW circuit is a closed circuit including the PP terminal of discharging connector 100. Thus, the PISW varies in potential. Even discharging connector 100 that does not have a power source generates the PISW signal by the PISW circuit. ECU 250 can determine a connector state based on the PISW signal (or PISW potential).

Discharging connector 100 includes detection circuits 540A and 540B and switches S3A and S3B. Switch S3A is configured to switch connection/disconnection between ECU 500 (CPLT signal generator 510) and the CPLT. Switch S3B is configured to switch detection circuits 540A and 540B. Switch S3B switches a detection circuit to be connected to the PISW circuit. Switches S3A and S3B gang and operate together. Switch S3A corresponds to an example of a "second switching mechanism" of the present disclosure. Switch S3B corresponds to an example of a "first switching mechanism" of the present disclosure.

Before discharging connector 100 is connected to (or inserted into) inlet 210, switch S3A is in a position to disconnect CPLT signal generator 510 from the CPLT, and switch S3B is in a position to connect detection circuit 540A to the PISW. When ECU 500 is activated by the power supplied from vehicle 200 (battery 230) on voltage lines L11 and L12, ECU 500 can turn switches S3A and S3B. Switches S3A and S3B are operated (or turned) for example by power supplied from AC/DC converter 550, and, in response to a control signal issued from ECU 500, switch S3A connects CPLT signal generator 510 to the CPLT and switch S3B connects detection circuit 540B to the PISW.

PWM signal generator 510 is connected via switch S3A to the CP terminal (CPLT) of discharging connector 100 by a signal line L15. In vehicle 200, the CPLT is connected to ECU 250 via a signal line L25. Signal line L25 is provided with a CPLT circuit 600. CPLT circuit 600 includes a switch controlled by ECU 250. ECU 250 can transmit to ECU 500 a CPLT signal generated by CPLT circuit 600. Electrically connecting ECU 500 to the CPLT allows ECU 500 and ECU 250 to communicate data (CPLT) therebetween.

Detection circuit 540A includes electrical resistors R1A, R2A and R3A, and switches S1A and S2A. A signal line L14 branches from the PISW via switch S3B via electrical resistor R1A into two branch paths L141A and L142A. Branch paths L141A and L142A are connected to neutral line L13. Electrical resistor R2A is disposed on branch path L141A, and electrical resistor R3A and switch S1A are disposed on branch path L142A. Electrical resistors R2A and R3A are disposed in parallel. Electrical resistor R3A and switch S1A are disposed in series. Switch S2A is disposed in parallel to electrical resistor R3A. Detection circuit 540A corresponds to an example of a "first resistance circuit" of the present disclosure.

Detection circuit 540B includes electrical resistors R1B and R2B and a switch S1B. Signal line L14 branches from the PISW via switch S3B via electrical resistor R1B into two branch paths L141B and L142B. Branch paths L141B and L142B are connected to neutral line L13. Electrical resistor R2B is disposed on branch path L141B, and switch S1B is disposed on branch path L142B. Detection circuit 540B corresponds to an example of a "second resistance circuit" of the present disclosure.

Switches S1A and S1B each gang with unlatch button 111 (Fig. 3) of discharging connector 100 to open and close. Switches S1A and S1B are each closed (or conduct) when unlatch button 111 is not pressed, and are each open (or interrupted) when unlatch button 111 is pressed. Switch S2A gangs with start discharge switch 112 (Fig. 3) of a discharging assembly 500 to open and close. Switch S2A is closed (or conducts) when start discharge switch 112 is turned off, and the switch is open (or interrupted) when start discharge switch 112 is turned on. In the present embodiment, start discharge switch 112 is turned on while the user presses start discharge switch 112, and start discharge switch 112 is turned off when the user releases start discharge switch 112. When the user does not operate any of unlatch button 111 and start discharge switch 112, switches S1A, S1B, and S2A are all closed. Switches S1A, S1B, and S2A each correspond to a normally-on switch.

In detection circuit 540A, when switches S1A and S2A are opened, detection circuit 540A has a larger resistance value (or composite resistance) than when switches S1A and S2A are closed, and accordingly, the PISW also rises in potential. ECU 250 can determine the state of switch S1A and that of switch S2A (the state of unlatch button 111 and that of start discharge switch 112) based on the PISW signal (or PISW potential).

In detection circuit 540B, when switch S1B is opened, detection circuit 540B has a larger resistance value (or composite resistance) than when switch S1B is closed, and accordingly, the PISW also rises in potential. ECU 250 can determine the state of switch S1B (the state of unlatch button 111) based on the PISW signal (or PISW potential).

Discharging connector 100 has unlatch button 111 to function as a switch to stop discharging power from vehicle 200, and start discharge switch 112 to function as a switch to start discharging power from vehicle 200. When the user operates start discharge switch 112, as predetermined, while the connector state is the connected state, vehicle 200 (ECU 250) recognizes that discharging power starts, and the vehicle (the ECU) starts discharging power. In the present embodiment, discharging power is started when the user turns on start discharge switch 112 twice. When unlatch button 111 is pressed while the vehicle discharges power, and the connector state becomes the fitted state or the unfitted state, vehicle 200 (ECU 250) recognizes that discharging power stops, and the vehicle (the ECU) stops discharging power.

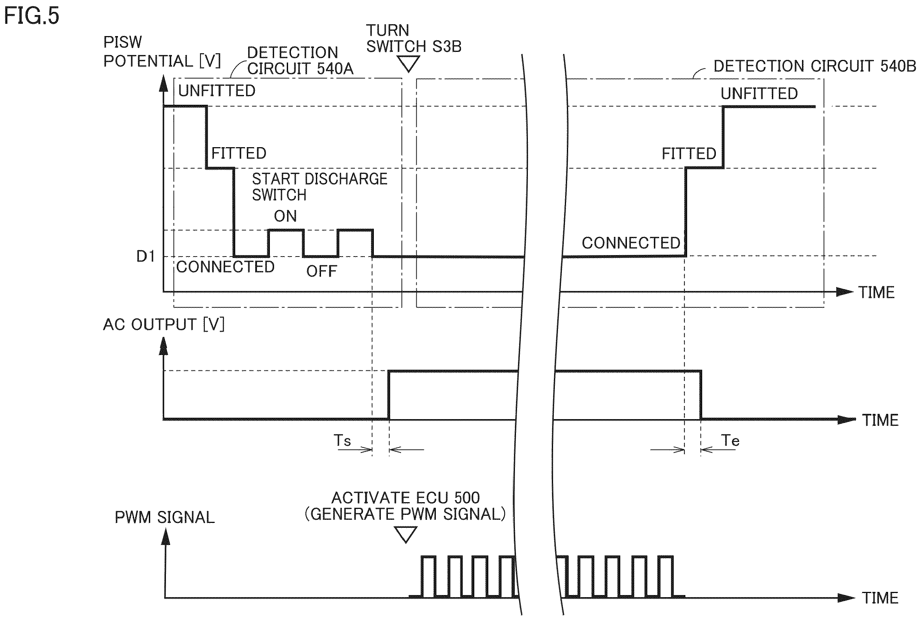

Fig. 5 is timing plots representing a sequence of starting and stopping discharging power by discharging connector 100. In Fig. 5, the top plot represents the PISW potential (or PISW signal), the middle plot represents power discharged output (or AC output), and the bottom plot represents the PWM signal. Before discharging connector 100 is connected (or inserted) to inlet 210, switch S3A is in a position to disconnect CPLT signal generator 510 from the CPLT, and switch S3B is in a position to connect detection circuit 540A. In this state when the user inserts discharging connector 100 into inlet 210 while pressing unlatch button 111 the connector state is changed from the unfitted state to the fitted state. When the connector state is the fitted state, discharging connector 100 and inlet 210 are electrically connected together, and the PISW and the GND are connected via detection circuit 540A. Thus, a closed circuit including the PP terminal (or the PISW circuit) is formed by detection circuit 540A, and the PISW decreases in potential. Thereafter when the user releases unlatch button 111 the connector state changes from the fitted state to the connected state and the PISW further decreases in potential.

In the connected state the PISW has a potential D1, which can be set, as appropriate, according to values of electrical resistors R1A, R2A and R3A. The PISW potential D1 is set based on at least one of a power supply voltage and a power supply current (a maximum current) that discharging connector 100 requires. In the present embodiment, the PISW potential D1 includes information of both the power supply voltage and the power supply current. For the PISW potential D1, for example, three patterns of "120 V:12 A", "120 V:24 A", and "240 V:32 A" may be set. ECU 250 controls AC inverter 221 based on the PISW potential D1 so that when discharging power starts, discharged power (or supplied power) is a power supply voltage and a power supply current that discharging connector 100 requires.

The connector state becomes the connected state, and thereafter when a predetermined period of time (e.g., of 500 ms) elapses, operation of start discharge switch 112 is enabled. When the user turns on start discharge switch 112, the PISW rises in potential. Thereafter when the user turns start discharge switch 112 back to off the PISW potential also turns back. When the user operates start discharge switch 112 to turn it on, off, on, off while the connector state is the connected state, ECU 250 recognizes that discharging power starts based on the PISW potential, and the ECU starts discharging power. In order to suppress an erroneous operation caused by noise, the recognition of start discharge switch 112 by ECU 250 is effective when a voltage corresponding to the on/off operation continues for a predetermined period of time (for example of 50 ms to 3000 ms).

Vehicle 200 discharges power as controlled by ECU 250. ECU 250 controls charging/discharging device 220 (AC/DC inverter 221) so that discharged power set by the PISW potential D1 is output from inlet 210 to discharging connector 100. Furthermore, while the vehicle discharges power, SMR 231 (Fig. 2) is controlled to be closed. A period of time Ts after an operation to start discharging power is performed before discharging power starts can be set as desired. ECU 250 may perform a predetermined process (e.g., a pre-discharging inspection such as inspection for disconnection) during the period of time Ts. During the period of time Ts, SMR 231 may be switched from an open state to a closed state.

When vehicle 200 starts discharging power, vehicle 200 (battery 230) supplies AC power on voltage lines L11 and L12 and AC/DC converter 550 receives and supplies the AC power to ECU 500 and PWM signal generator 510. This activates ECU 500, and PWM signal generator 510 is operable. When ECU 500 is activated, ECU 500 generates a PWM signal by PWM signal generator 510. The PWM signal at least includes information of a power supply current (a maximum current) that discharging connector 100 requires. For example, when the power supply current is set depending on the duty ratio of the PWM signal, the power supply current can be set in more patterns than the PISW signal (the potential D1) (the PWM signal allows the power supply current to be set more finely than the PISW signal does.).

When the PMW signal generator 510 generates the PWM signal, ECU 500 turns switch S3A to connect PWM signal generator 510 to the CPLT, and also turns switch S3B to connect detection circuit 540B to the PISW. Thus, the PWM signal (the CPLT signal) is transmitted to ECU 250. ECU 250 senses a power supply current that discharging connector 100 requires based on the PWM signal. When the power supply current is different from the power supply current set by the PISW signal (the potential D1), ECU 250 controls charging/discharging device 220 (AC/DC inverter 221) based on the power supply current set by the PWM signal. Note that the PISW signal is switched to the PISW potential obtained through detection circuit 540B.

When switch S3B is turned and detection circuit 540B is connected to the PISW (that is, the closed circuit including the PP terminal (the PISW circuit) is formed by detection circuit 540B), and unlatch button 111 is pressed while the vehicle discharges power, the connector state changes from the connected state to the fitted state, and the PISW rises in potential. When the connector state becomes the fitted state, ECU 250 recognizes that discharging power stops based on the potential of the PISW, and the ECU stops discharging power. A period of time Te after an operation to stop discharging power is performed before discharging power is stopped may be a period of time defined in the standard "IEC61851-1".

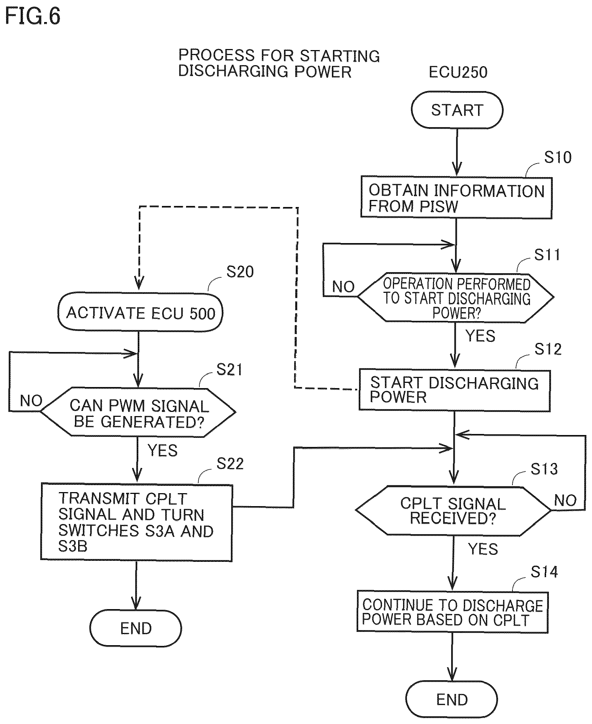

Fig. 6 is a flowchart of a process performed by ECU 250 and ECU 500 to start discharging power. This flowchart is executed when discharging connector 100 is connected to inlet 210 (or when the connector state is the fitted state) while vehicle 200 is stationary. For example, the process may be started when the connector state is the fitted state and the PISW potential decreases.

In step (hereinafter, abbreviated as "S") 10, ECU 250 senses from the PISW signal (the PISW potential) that the connector state is the connected state, and the ECU obtains information of a power supply voltage and a power supply current. When S10 is performed, vehicle 200 does not discharge power, and switch S3A is in a position to disconnect CPLT signal generator 510 from the CPLT and switch S3B is in a position to connect detection circuit 540A. Therefore, the PISW signal obtained in S10 is the PISW potential of the closed circuit formed by detection circuit 540A.

Subsequently, in S11, when start discharge switch 112 is operated and a change is sensed in the PISW potential, a positive acknowledgement is made and the process proceeds to S12. In S12, ECU 250 controls charging/discharging device 220 and the like to discharge power from vehicle 200 (battery 230) based on a power supply voltage and a power supply current set by the PISW potential.

Vehicle 200 starts discharging power, and in S20 ECU 500 is activated by the power supplied from vehicle 200 (battery 230) on voltage lines L11 and L12. When ECU 500 is activated, whether PWM signal generator 510 can generate a PWM signal is determined in S21. For example, when PWM signal generator 510 receives voltage equal to or higher than an operating voltage, it is determined that the PWM signal can be generated, and the process proceeds to S22.

In S22, the PWM signal is generated, and switches S3A and S3B are turned. Switch S3A is turned to a position to connect CPLT signal generator 510 to the CPLT. Thus, the PWM signal (the CPLT signal) is transmitted to ECU 250. Switch S3B is turned to connect detection circuit 540B to the PISW. Thus, a closed circuit including the PP terminal (a PISW circuit) is formed by detection circuit 540B.

In S13, ECU 250 determines whether the CPLT signal is received. In S22, when switch S3A is turned to a position to connect CPLT signal generator 510 to the CPLT, ECU 250 receives the CPLT signal, and a positive acknowledgement is made and the process proceeds to S14.

In S14, ECU 250 senses a power supply current that discharging connector 100 requires based on the CPLT signal (the PWM signal), controls charging/discharging device 220 (AC/DC inverter 221) based on the power supply current based on the PWM signal, and continues discharging power from vehicle 200.

According to the present embodiment, discharging connector 100 configuring a discharging assembly receives power supplied from battery 230 mounted on vehicle 200 and supplies the received power to electrical load 300. Discharging connector 100 includes voltage lines L11 and L12 to supply power to electrical load 300. Discharging connector 100 includes a PP terminal (PISW). When discharging connector 100 is connected to inlet 210, the PP terminal (PISW) receives a reference voltage supplied from vehicle 200. Detection circuit 540A of discharging connector 100 forms a closed circuit including the PP terminal (PISW). Discharging connector 100 includes PWM signal generator 510 that generates a PWM signal. PWM signal generator 510 generates the PWM signal using the power supplied on voltage lines L11 and L12 as a power source.

ECU 250 starts supplying power based on a change in the PISW potential of the closed circuit formed by detection circuit 540A. When supplying power on the power lines is started, ECU 500 uses this power as a power source to generate the PWM signal by the PWM signal generator.

Supplying power is started based on a change in the PISW potential (the PISW signal) of the closed circuit formed by detection circuit 540A. The supplied power is used as a power source to generate the PWM signal (the CPLT signal). Discharging connector 100 (power supply equipment) that does not comprise a power source can generate the PWM signal (the CPLT signal) and increase a degree of freedom in setting a power supply current.

According to the present embodiment, discharging connector 100 includes detection circuit 540B that forms a closed circuit including the PP terminal (PISW) when discharging connector 100 is connected to inlet 210, and a CP terminal (CPLT) connected to PWM signal generator 510. Detection circuit 540B is connected to detection circuit 540A in parallel and switched by switch S3B so that one of detection circuits 540A and 540B forms the closed circuit including the PP terminal (PISW). When discharging connector 100 is connected to inlet 210, the PWM signal is transmitted to vehicle 200 via the CP terminal (CPLT).

When switch S3B switches detection circuit 540B to form the closed circuit including the PP terminal (PISW), a change in the PISW potential of the closed circuit including detection circuit 540B can be used to sense connection between inlet 210 and discharging connector 100. The PWM signal (the CPLT signal) is transmitted to vehicle 200 via the CP terminal (CPLT), and the PWM signal can be used to set a power supply current supplied from vehicle 200.

According to the present embodiment, discharging connector 100 includes switch S3A that switches connection/disconnection between PWM signal generator 510 and the CP terminal (CPLT). Before discharging connector 100 is connected to inlet 210, switch S3B is set in a position to allow detection circuit 540A to form a closed circuit including the PP terminal (PISW), and switch S3A is set in a position to interrupt connection between PWM signal generator 510 and the CP terminal (CPLT). When discharging connector 100 is connected to inlet 210, ECU 250 starts supplying power on voltage lines L11 and L12 based on a change in the PISW potential of the closed circuit formed by detection circuit 540A. When supplying power on voltage lines L11 and L12 is started, ECU 500 turns switch S3B to allow detection circuit 540B to form the closed circuit including the PP terminal (PISW), and turns switch S3A to connect the PWM signal generator to the CP terminal (CPLT).

Before discharging connector 100 is connected to inlet 210, a closed circuit including the PP terminal (PISW) is formed by detection circuit 540A. When discharging connector 100 is connected to inlet 210, supplying power is started based on a change in the PISW potential of the closed circuit formed by detection circuit 540A. When supplying power on voltage lines L11 and L12 is started, switches S3B and S3A turn so that the closed circuit including the PP terminal (PISW) is formed by detection circuit 540B and PWM signal generator 510 is connected to the CP terminal (CPLT). Thus, after supplying power on voltage lines L11 and L12 is started, the PWM signal (the CPLT signal) can be used to supply (or discharge) power.

According to the present embodiment, switches S3B and S3A operate using power supplied on voltage lines L11 and L12. Switch S3B is in a position to allow detection circuit 540A to form a closed circuit including the PP terminal (PISW) when no power is supplied, and switch S3A is in a position to interrupt connection between the PWM signal generator and the CP terminal (CPLT) when no power is supplied.

Even discharging connector 100 that does not comprise a power source (a battery) can form a closed circuit including the PP terminal (PISW) by detection circuit 540A and interrupt connection between PWM signal generator 510 and the CP terminal (CPLT) before discharging connector 100 is connected to inlet 210. After vehicle 200 supplies power, switches S3B and S3A are operated so that switch S3B is turned to allow detection circuit 540B to form the closed circuit including the PP terminal (PISW) and switch S3A is turned to connect PWM signal generator 510 to the CP terminal (CPLT).

In the above embodiment, detection circuit 540B, switch S3A, and switch S3B may be dispensed with. In that case, when discharging connector 100 is connected to inlet 210, the PISW circuit is configured by detection circuit 540A, and PWM signal generator 510 is connected to the CP terminal (CPLT). Even in this case, information of a power supply voltage or a power supply current (a maximum current) that discharging connector 100 requires can be obtained based on the PISW potential D1 provided when the connector state is the connected state, and vehicle 200 can start discharging power. When vehicle 200 starts discharging power, the power supplied from vehicle 200 can be used to activate ECU 500 and allow PWM signal generator 510 to generate and transmit a PWM signal (a CPLT signal) to ECU 250. Even if discharging connector 100 does not comprise a power source (a battery), ECU 250 can control discharging power based on the PWM signal (the CPLT signal).

In the above embodiment, when switch S3A is dispensed with, and discharging connector 100 is connected to inlet 210, PWM signal generator 510 may be connected to the CP terminal (CPLT). This configuration also achieves the same effect as described above.

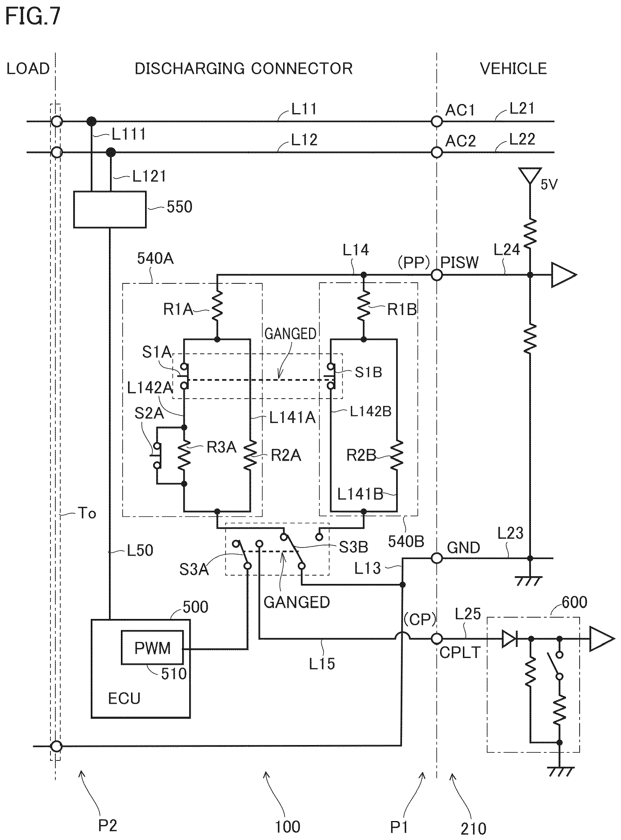

Fig. 7 is a schematic diagram of a circuit configuration of a discharging connector and an inlet according to a modification. In the above embodiment, switch S3B is provided between signal line L14 (PISW) and detection circuits 540A and 540B and switches detection circuits 540A and 540B. In the modification, as illustrated in Fig. 7, switch S3B is provided between neutral line L13 and detection circuits 540A and 540B. Turning switch S3B connects the PIWS and the GND selectively via detection circuits 540A and 540B and forms a closed circuit (a PISW circuit). This modification also achieves the same effect as that of the above-described embodiment.

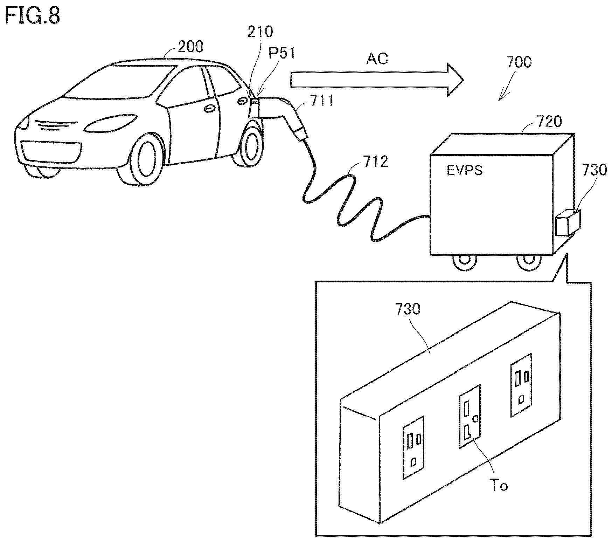

In the above embodiment, the discharging connector alone functions as a discharging assembly. It is not essential, however, that the discharging assembly is constituted of the discharging connector alone. Fig. 8 shows a modification of the discharging assembly (the discharging connector).

Referring to Fig. 8, a discharging assembly 700 includes a discharging connector 711, a housing 720 incorporating a circuit electrically connected to discharging connector 711, and a cable 712 connecting discharging connector 711 and housing 720. Housing 720 corresponds to a main body of an EVPS (electric vehicle power system). The EVPS is configured to control charging/discharging power to/from a vehicle. Housing 720 may include a display, a console, and the like. Discharging assembly 700 includes the EVPS and a charging/discharging cable assembly. The charging/discharging cable assembly is a cable assembly for coupling the vehicle and the EVPS and includes a charging/discharging connector for coupling to the vehicle. In the example shown in Fig. 8, discharging connector 711 functions as a charging/discharging connector. Cable 712 functions as a charging/discharging cable.

Discharging connector 711 is configured to be connectable to inlet 210 of vehicle 200. Housing 720 includes a socket box 730. Socket box 730 for example has a plurality of sockets To. In this modification, the circuit shown in Fig. 4 or 7 (the circuit of discharging connector 100) is provided inside discharging connector 711, cable 712, and housing 720.

For discharging assembly 700 according to this modification, discharging connector 711 and housing 720 are connected via cable 712, and a degree of freedom in disposing socket To is increased. Furthermore, a portion of a discharging circuit can be accommodated in housing 720, and discharging connector 711 can be easily reduced in size.

In the above embodiment, a charging connector for charging battery 230 can also be connected to inlet 210. A PISW potential obtained when the discharging connector is connected to inlet 210 and a PISW potential obtained when the charging connector is connected to inlet 210 are set to be different. ECU 250 may thus determine what type of connector (or whether the discharging connector or the charging connector) is connected to inlet 210 based on the PISW potential.

In the above embodiment, PWM signal generator 510, switch S3A, and switch S3B are controlled by ECU 500 provided in discharging connector 100. However, PWM signal generator 510, switch S3A, and switch S3B may operate as controlled by ECU 250 provided in vehicle 200. For example, discharging connector 100 is provided with a control pilot circuit including a PWM signal generator (transmitter), a resistor, and a voltage sensor. Furthermore, a drive circuit for switches S3A and S3B is configured to be controllable by the CPLT signal. After starting discharging power based on the PISW potential (the PISW signal), ECU 250 uses the CPLT signal to operate switches S3A and S3B. When switch S3A is operated, the control pilot circuit (the PWM signal generator) is connected to CPLT circuit 600. ECU 250 reduces in potential a CPLT signal input to the control pilot circuit. When the voltage sensor senses that the CPLT signal decreases in potential, the control pilot circuit generates a PWM signal by the PWM signal generator. The PWM signal is input to CPLT circuit 600 through the CP terminal. Note that a server capable of communicating with vehicle 200 may perform the same function as ECU 250.

In the above embodiment, a discharging assembly is used to supply (or discharge) to electrical load 300 the power of battery 230 mounted on vehicle 200. However, the discharging assembly may be used to supply (or discharge) to an external load the power generated by a power generation device mounted on a vehicle. For example, the vehicle may be an FCEV (fuel cell electric vehicle) having a hydrogen tank and a fuel cell mounted thereon.

While embodiments of the present disclosure have been described above, it should be understood that the embodiments disclosed herein are by way of illustration and example only and not to be taken by way of limitation. The scope of the present disclosure is interpreted by the terms of the appended claims and is intended to encompass any modification falling within the meaning and scope equivalent to the terms of the claims.

## Claims

1. A power supply system comprising:
a vehicle (200) having mounted thereon at least one of a power storage device (230) and a power generation device and including a discharging port (210);
a discharging assembly including a discharging connector (100) connectable to the discharging port; and
a controller (500; 250), wherein
the discharging assembly includes:
a power line (L11, L12) to receive power supplied from at least one of the power storage device and the power generation device and transmit the received power to a load (300); and
a PWM signal generator (510) configured to generate a PWM signal using the power supplied on the power line as a power source, and
the controller is configured to control the PWM signal generator to generate the PWM signal when supplying the power on the power line is started.

2. The power supply system according to claim 1, wherein
the discharging assembly further includes:
a first terminal (PISW) to receive a reference voltage supplied from the vehicle; and
a first resistance circuit (540A) configured to form a closed circuit including the first terminal when the discharging connector is connected to the discharging port, and
the controller is configured to control the vehicle to start supplying the power on the power line based on a potential of the closed circuit formed by the first resistance circuit.

3. The power supply system according to claim 2, wherein
the discharging assembly further includes:
a second terminal (CPLT) connected to the PWM signal generator;
a second resistance circuit (540B) configured to form the closed circuit including the first terminal when the discharging connector is connected to the discharging port; and
a first switching mechanism (S3B) configured to switch the first and second resistance circuits so that one of the first and second resistance circuits forms the closed circuit including the first terminal,
the controller is configured to control the first switching mechanism so that the second resistance circuit forms the closed circuit including the first terminal after supplying the power on the power line is started, and
the PWM signal is transmitted to the vehicle via the second terminal.

4. The power supply system according to claim 3, wherein
the discharging assembly further includes a second switching mechanism (S3A) configured to switch connection and disconnection between the PWM signal generator and the second terminal,
before the discharging connector is connected to the discharging port, the controller is configured to:
control the first switching mechanism so that the first resistance circuit forms the closed circuit including the first terminal; and
control the second switching mechanism to interrupt connection between the PWM signal generator and the second terminal, and
when supplying the power on the power line is started, the controller is configured to:
control the first switching mechanism so that the second resistance circuit forms the closed circuit including the first terminal; and
control the second switching mechanism to connect the PWM signal generator to the second terminal.

5. The power supply system according to claim 4, wherein
the first and second switching mechanisms operate using power supplied on the power line,
the first switching mechanism connects the first resistance circuit to the first terminal so that the first resistance circuit forms the closed circuit including the first terminal when the power is not supplied, and
the second switching mechanism interrupts connection between the PWM signal generator and the second terminal when the power is not supplied.

6. The power supply system according to any one of claims 1 to 5, wherein the controller (500) is provided in the discharging assembly.

7. The power supply system according to any one of claims 1 to 5, wherein the controller (250) is provided in the vehicle.
